# EUROPEAN PATENT SPECIFICATION

(11) **EP 1 150 472 B1**
(45) Date of publication and mention of the grant of the patent: **06.10.2004**
(21) Application number: 01303583.7
(22) Date of filing: 19.04.2001
(51) Int. Cl.: H04L 29/06

(54) **Method and system for installing available network protocols**
Verfahren und System zur Installation von verfügbaren Netzprotokollen
Procédé et système d'installation de protocoles réseau disponibles

(30) Priority: 27.04.2000 US 560303
(43) Date of publication of application: 31.10.2001
(73) Proprietor: Hewlett-Packard Company, Palo Alto, California 94304-1112 (US)
(72) Inventor: Mentze, Duane, Palo Alto, California 94304 (US); Juliao, Fernando, Palo Alto, California 94304 (US); Brodeu, Cameron, Palo Alto, California 94304 (US)
(74) Representative: Jehan, Robert

(56) References cited:
- US-A- 5 596 723
- US-A- 5 754 830
- US-A- 5 960 167
- US-A- 5 999 979

## Description

The present invention generally relates to a method and a system for installing available network protocols, such as available network protocols with an operative connection between a client computer and at least one peripheral device.

As networking becomes more common, many users are now connecting multiple peripheral devices to multiple network environments with one or more client computers. This arrangement allows a number of client computers to share the services of these peripheral devices, such as multiple printers. Such client computers can be personal computers or other computers and will be referred to herein simply as a client. While network experts can easily perform the installation task of connecting these multiple printers to the clients, the installation task is generally too challenging for a typical user. The installation task requires decisions on various topics, such as network protocol or connection types to use, which may be information not generally known to a typical user.

One prior solution was to provide the user with multiple software tools along with a manual for installing a printer for each particular environment. The user would have to consult the manual to determine which software tool should be used for the installation process. This method, however, was very time-consuming for the user, and the users were generally confused about what type of protocols or connection they had.

Another prior solution was to provide one software program but this solution usually required the user to make a manual choice of the protocol or connection types for a given network configuration, which was information generally not known to a typical user. In addition, this solution also assumed that the user had an adequate understanding of networking to accomplish the installation. Generally, an installation process requires the user to understand the capabilities of the network printer, the nature of the networking environment the client is connected to, and the configuration of the client.

US Patent No. 5,596,723 discloses a method and apparatus for automatically detecting the prevalence of local area network operating system services and network frame type protocols that are being used on a network to which a computer system is being attached. The computer system configures itself according to the most prevalent network operating system and frame type.

US Patent No. 5,596,723 discloses the features of a method of installing a network protocol between a client computer and at least one peripheral device including the steps of: means for determining whether a network protocol is supported by the client computer and the peripheral device; and means for verifying communication between the client computer and the peripheral device when the network protocol is supported.

US Patent No. 5,999,979 discloses a method in a computer network for automatically detecting a most advantageous protocol for communication by a client computer. The most advantageous protocol is determined based on a predefined protocol priority.

US Patent No. 5,754,830 discloses in Figures 1 and 2 a method for connecting a client system to a legacy host system.

The present invention seeks to provide an improved method for installing only available network protocols that are valid and operational during the installation process; an improved method for installing the available network protocols that is more user friendly and more fitted for a typical user; and/or an improved method for installing the available network protocols that is less time consuming for the user.

According to an aspect of the present invention, there is provided a method of installing the available network protocols having an operative connection between a client computer and at least one peripheral device as specified in claim 1.

According to another aspect of the present invention, there is provided a system for installing the available network protocols having an operative connection between a client computer and at least one peripheral device as specified in claim 7.

The preferred embodiment provides a method and a system for installing the available network protocols on a client with an operative connection between a client and at least one peripheral device. It installs only the available network protocols that are operational and valid. As a result, the installatian process would be less cumbersome for a typical user. In addition, the preferred embodiment also avoids having the user needlessly searching or instiling network protocols that are not even available or operational.

The preferred embodiment provides a method and system that includes the steps of determining whether a network protocol in a network protocol ("NP") list having all possible types of network protocol is supported by the client computer and the peripheral device, verifying communication between the client computer and the peripheral device over the network protocol when the network protocol is supported by the client computer and the peripheral device, and adding the network protocol with verified communication to an available-connection list.

The invention also extends to a client computer adapted for installing the available network protocols having an operative connection between a client computer and at least one peripheral device, comprising means for determining whether a network protocol in a network protocol list having all possible types of network protocol is supported by the client computer and the peripheral device; means for verifying communication between the client computer and the peripheral device over the network protocol when the network protocol is supported by the client computer and the peripheral device; and means for adding the network protocol with verified communication to an available-connection list.

An embodiment of the present invention is described below, by way of example only, with reference to the accompanying drawings, in which:
Figure 1 is a schematic diagram of an exemplary network architecture in which an embodiment of the present invention can be used; and
Figure 2 is a flowchart describing the preferred steps involved in installing the available network protocols with an operative connection between a client computer and at least one peripheral device.

Broadly stated, the described embodiment is directed to an improved method and system for installing only the available network protocols with operative connections. Since the embodiment installs only the available network protocols that are valid and operational at the time of the installation, the users need not search or install network protocols that they will not use. In addition, the embodiment provides an installation process that is more fitting to a typical user because it is more user friendly.

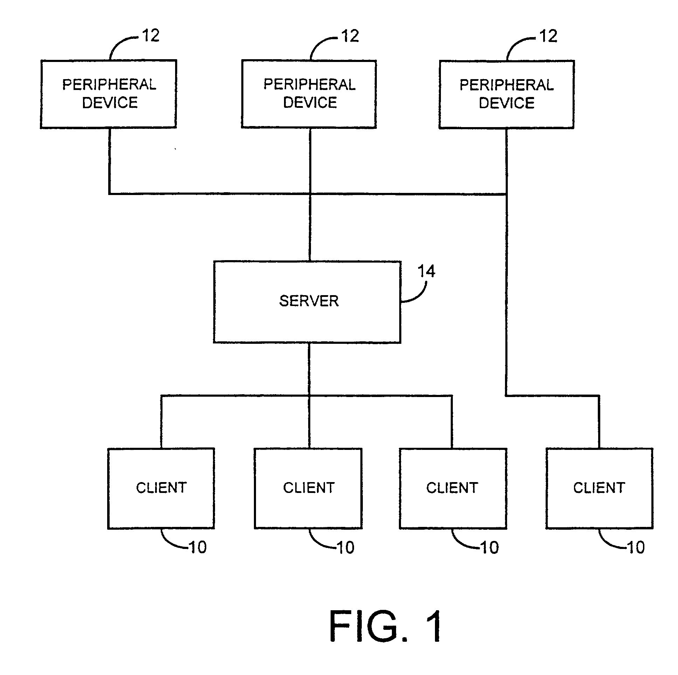

A block diagram of an exemplary network system in which the preferred method can be implemented is illustrated in Figure 1. Although several clients 10 are shown to be connected to multiple peripheral devices 12 via a network server 14, it is only an example of how the clients 10 can be connected to the peripheral devices 12. As shown in Figure 1, the client 10 can also be connected to the peripheral devices directly. Other connection arrangements are possible. In this example, multiple peripheral devices 12 are connected to three clients 10 via a network server 14 and one client via a direct connection.

Great complexity can result during the installation process because of the numerous network environments that are available on the commercial marker today. In addition, each peripheral device can also be connected to the network server in various ways. As a result, the system determines and displays only the valid options to the user for selection during an installation process.

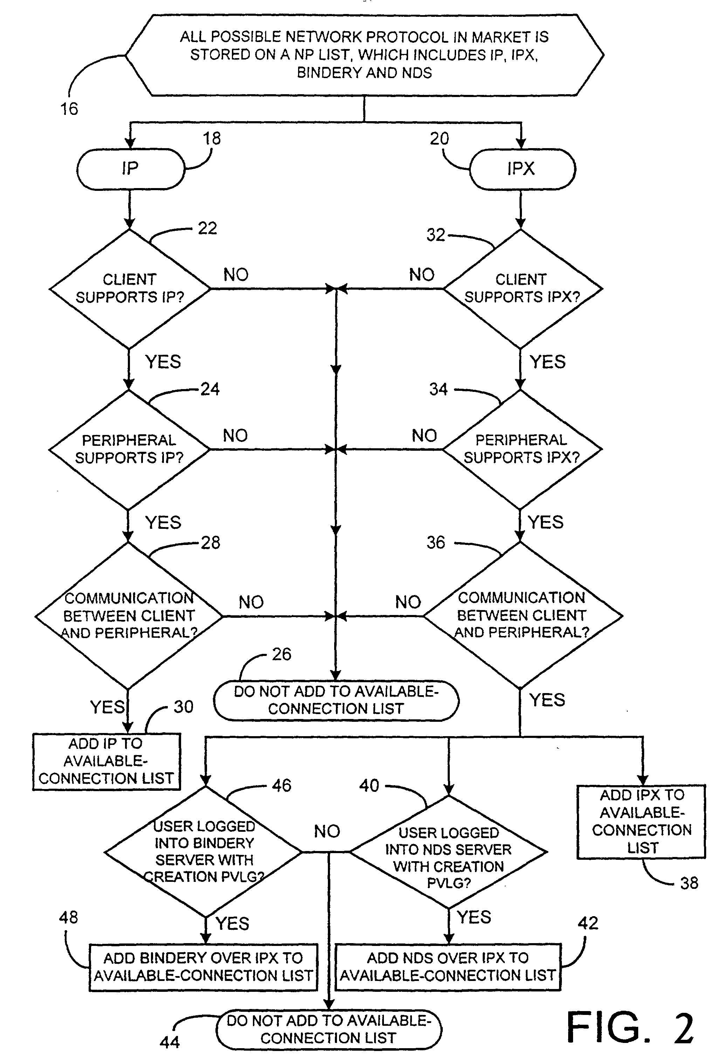

A flowchart of the preferred steps in installing the available network protocols with an operative connection between a client and at least one peripheral device is shown in Figure 2. As there are four predominant types of print modes in the industry, namely Internet Protocol ("IP") direct, Inter-network Packet Exchange Protocol ("IPX") direct, IPX over a Bindery server, and IPX over a Novell Directory Services ("NDS") server, the described embodiment has been developed using these four types of print modes. However, it is contemplated that the system can be implemented for other network protocols.

With that in mind, the process shown in Figure 2 is the preferred method for using the four types of print modes that are currently available, and it is just one way to implement the system.

The first step is to store all the possible network protocols or print modes that are currently available in the industry in a NP list (block 16). In this case, the IP direct, IPX direct, IPX over a Bindery server, and IPX over a NDS server are included in the list (block 16). As noted earlier, other network protocols can be added as they become available. In other words, the system is not limited to the currently preferred NP list, it may be changed as needed and as technology changes. In this preferred embodiment, there will be only two general options for the network protocols, specifically the IP (block 18) and IPX (block 20). Both the IP and the IPX protocols are processed separately, and should be considered as separate subroutines of the process. For the IP protocol, the steps are quite straightforward. The client first determines whether the client supports the IP protocol. If the client does support the IP protocol (block 22), the peripheral device is examined (block 24). Otherwise, the subroutine for the IP protocol will end, and the IP protocol option will not be added to the available-connection list (block 26). In the preferred embodiment, the available-connection list is actually displayed to the user. However, the display is not necessary for the installation process. It is contemplated that the system can automatically install all the network protocols in the available-connection list, and is within the scope of the claims. In the case of displaying to the user, the IP protocol will not be displayed as an option to the user as an available connection during the installation since it will not in the available-connection list. Similarly, the subroutine for the IP protocol ends if the peripheral device does not support the IP protocol (block 24). If, however, the client and the peripheral device both support the IP protocol, the next step is to verify that the client and the peripheral are communicating with each other (block 28). Only then will the IP protocol option be added to the available-connection list for display to the user (block 30). Otherwise, if it is determined that the client and the peripheral are not communicating (block 28), the IP protocol option will not be included in the available-connection list (block 26). It should be noted that although Figure 2 shows that the client is checked before the peripheral device, the order of verification is arbitrarily assigned. The order does not affect the system and any other order arrangements are contemplated.

With the next subroutine for the IPX protocol, similar steps are followed in the beginning. It is first determined whether the client (block 32) and the peripheral device (block 34) support the IPX protocol, If either one of them does not support the IPX protocol (block 32 and 34), it will not be added to the available-connection list (block 26). Otherwise, the process continues onto the next step of verifying communication between the client and the peripheral device (block 36). Again, the subroutine for the IPX protocol ends (block 26) if communication is not found (block 36). However, if communication is found between the client and the peripheral device (block 36), more steps of verifying are included in the IPX protocol subroutine, and they are independent of each other. In other words, like the IPX and IP protocols, they are independent steps within the IPX subroutine and do not affect each other. The first one is adding the IPX protocol to the available-connection list since communication was confirmed (block 38). Next, independent of the previous step, the IPX subroutine determines whether the client computer is logged into a NDS server and has creation privilege in the server (block 40). If so, the NDS over IPX protocol option is added to the available-connection list (block 42). Otherwise, the NDS protocol is not added to the list (block 44). Again, the Bindery over IPX protocol option from the NP list is processed by determining whether the client computer is logged into a Bindery server with creation privilege (block 46). The Bindery over IPX protocol option is added to the available-connection list (block 48) if the user is logged into a Bindery server with creation privilege. If not, the Bindery option is not added (block 44). At this point, the available connection list is displayed to the user for selection, and the process will end since all the options in the NP list have been processed.

## Claims

1. A method of installing available network protocols having an operative connection between a client computer (10) and at least one peripheral device (12), the method comprising the steps of:
determining (22,32) whether a particular network protocol in a network protocol list having all possible types of network protocol is supported by the client computer and the peripheral device;
verifying (28,36) communication between the client computer and the peripheral device with the particular network protocol when the network protocol is supported by the client computer and the peripheral device;
adding (30,38) the network protocol with verified communication to an available connection list;
repeating said determining step for all network protocols in the network protocol list; characteized by the step of:
displaying the available connection list to the user for selection once all the network protocols in the network protocol list have been processed.

2. A method according to claim 1, comprising the step of repeating said determining step for another network protocol in the network protocol list when the network protocol is not supported by the client computer and the peripheral device.

3. A method according to claim 1 or claim 2, wherein said network protocol list includes an Internet protocol and an Inter-network Packet Exchange protocol.

4. A method according to claim 3, wherein said Inter-network Packet Exchange protocol includes a Bindery over Inter-network Packet Exchange protocol and a Novell Directory Services over Inter-network Packet Exchange protocol.

5. A method according to claim 4, comprising the steps of:
determining (46) whether the client computer is logged into a Bindery server with creation privilege; and
adding (48) the Bindery over Inter-network Packet Exchange protocol to the available connection list when the client computer is logged into a Bindery server with creation privilege.

6. A method according to claim 4, comprising the steps of: determining (40) whether the client computer is logged into a Novell Directory Services server with creation privilege; and adding (42) the Novell Directory Services over Inter-network Packet Exchange protocol to the available-connection list when the client computer is logged into a Novell Directory Services server with creation privilege.

7. A system for installing available network protocols having an operative connection between a client computer (10) and at least one peripheral device (12), comprising:
means (14) for determining whether a network protocol in a network protocol list having all possible types of network protocol is supported by the client computer and the peripheral device;
means (14) for verifying communication between the client computer and the peripheral device over the network protocol when the network protocol is supported by the client computer and the peripheral device;
means (14) for adding the network protocol with verified communication to an available-connection list;
means for repeating said determining step for all network protocols in the network protocol list; **characterized by** a
means for displaying the available connection list to the user for selection once all the network protocols in the network protocol list have been processed.

## Patentansprüche

1. Ein Verfahren zum Installieren von verfügbaren Netzwerkprotokollen, die eine wirksame Verbindung zwischen einem Clientcomputer (10) und zumindest einem Peripheriegerät (12) aufweisen, wobei das Verfahren folgende Schritte aufweist:
Bestimmen (22, 32), ob ein spezielles Netzwerkprotokoll in einer Netzwerkprotokollliste, die alle möglichen Typen eines Netzwerkprotokolls aufweist, durch den Clientcomputer und das Peripheriegerät unterstützt wird;
Verifizieren (28, 36) einer Kommunikation zwischen dem Clientcomputer und dem Peripheriegerät mit dem speziellen Netzwerkprotokoll, wenn das Netzwerkprotokoll durch den Clientcomputer und das Peripheriegerät unterstützt wird;
Hinzufügen (30, 38) des Netzwerkprotokolls mit einer verifizierten Kommunikation zu einer Verfügbare-Verbindung-Liste;
Wiederholen des Bestimmungsschritts für alle Netzwerkprotokolle in der Netzwerkprotokollliste; **gekennzeichnet durch** folgenden Schritt:
Anzeigen der Verfügbare-Verbindung-Liste dem Benutzer zu einer Auswahl, wenn alle Netzwerkprotokolle in der Netzwerkprotokollliste einmal verarbeitet wurden.

2. Ein Verfahren gemäß Anspruch 1, das den Schritt des Wiederholens des Bestimmungsschritts für ein anderes Netzwerkprotokoll in der Netzwerkprotokollliste aufweist, wenn das Netzwerkprotokoll durch den Clientcomputer und das Peripheriegerät nicht unterstützt wird.

3. Ein Verfahren gemäß Anspruch 1 oder Anspruch 2, bei dem die Netzwerkprotokollliste ein Internetprotokoll und ein Inter-Network-Packet-Exchange-Protokoll umfasst.

4. Ein Verfahren gemäß Anspruch 3, bei dem das Inter-Netzwerk-Paketaustauschprotokoll ein Bindery-Over-Inter-Network-Packet-Exchange-Protokoll und ein Novell-Directory-Services-Over-Inter-Network-Packet-Exchange-Protokoll umfasst.

5. Ein Verfahren gemäß Anspruch 4, das folgende Schritte aufweist:
Bestimmen (46), ob der Clientcomputer in einen Bindery-Server mit einem Erzeugungsprivileg eingeloggt ist; und
Hinzufügen (48) des Bindery-Over-Inter-Network-Packet-Exchange-Protokolls zu der Verfügbare-Verbindung-Liste, wenn der Clientcomputer in einen Bindery-Server mit einem Erzeugungsprivileg eingeloggt ist.

6. Ein Verfahren gemäß Anspruch 4, das folgende Schritte aufweist:
Bestimmen (40), ob der Clientcomputer in einen Novell-Directory-Services-Server mit einem Erzeugungsprivileg eingeloggt ist; und Hinzufügen (48) des Novell-Directory-Services-Over-Inter-Network-Packet-Exchange-Protokolls zu der Verfügbare-Verbindung-Liste, wenn der Clientcomputer in einen Novell-Directory-Services-Server mit einem Erzeugungsprivileg eingeloggt ist.

7. Ein System zum Installieren von verfügbaren Netzwerkprotokollen, die eine wirksame Verbindung zwischen einem Clientcomputer (10) und zumindest einem Peripheriegerät (12) aufweisen, das folgende Merkmale aufweist:
eine Einrichtung (14) zum Bestimmen, ob ein Netzwerkprotokoll in einer Netzwerkprotokollliste, die alle möglichen Typen eines Netzwerkprotokolls aufweist, durch den Clientcomputer und das Peripheriegerät unterstützt wird;
eine Einrichtung (14) zum Verifizieren einer Kommunikation zwischen dem Clientcomputer und dem Peripheriegerät über das Netzwerkprotokoll, wenn das Netzwerkprotokoll durch den Clientcomputer und das Peripheriegerät unterstützt wird;
eine Einrichtung (14) zum Hinzufügen des Netzwerkprotokolls mit einer verifizierten Kommunikation zu einer Verfügbare-Verbindung-Liste;
eine Einrichtung zum Wiederholen des Bestimmungsschritts für alle Netzwerkprotokolle in der Netzwerkprotokollliste; **gekennzeichnet durch**
eine Einrichtung zum Anzeigen der Verfügbare-Verbindung-Liste dem Benutzer zu einer Auswahl, wenn alle Netzwerkprotokolle in der Netzwerkprotokollliste einmal verarbeitet wurden.

## Revendications

1. Un procédé d'installation de protocoles de réseaux disponibles comprenant une connexion fonctionnelle entre un ordinateur client (10) et au moins un dispositif périphérique (12), le procédé comprenant les étapes consistant à:
déterminer (22, 32) si un protocole particulier de réseau dans une liste de protocoles de réseaux qui inclut tous les types possibles de protocoles de réseaux est pris en charge par l'ordinateur client et le dispositif périphérique;
vérifier (28, 36) une communication entre l'ordinateur client et le dispositif périphérique au moyen du protocole particulier de réseau lorsque le protocole de réseau est pris en charge par l'ordinateur client et le dispositif périphérique;
ajouter (30, 38) le protocole de réseau à communication vérifiée à une liste de connexions disponibles;
répéter ladite étape de détermination pour tous les protocoles de réseaux de la liste des protocoles de réseaux;
**caractérisé par** l'étape consistant à:
afficher à l'utilisateur pour sélection la liste des connexions disponibles dès lors que tous les protocoles de réseaux de la liste de protocoles de réseaux ont été traités.

2. Un procédé selon la revendication 1, comprenant l'étape consistant à répéter ladite étape de détermination pour un autre protocole de réseau de la liste des protocoles de réseaux lorsque le protocole de réseau n'est pas pris en charge par l'ordinateur client et le dispositif périphérique.

3. Un procédé selon la revendication 1 ou la revendication 2 dans lequel ladite liste de protocoles de réseaux inclut un protocole Internet et un protocole d'échange de paquets entre réseaux ou Inter-network Packet Exchange, en abrégé IPX, selon le terme anglo-saxon .

4. Un procédé selon la revendication 3 dans lequel ledit protocole d'échange de paquets entre réseaux inclut une Bindery, littéralement une reliure en termes d'édition, par le protocole d'échange de paquets entre réseaux et un service dit Novell Directory Service, littéralement service de répertoire Novell par le protocole d'échange de paquets entre réseaux.

5. Un procédé selon la revendication 4, comprenant les étapes consistant à:
déterminer (46) si l'ordinateur client est inscrit dans un serveur de Bindery avec privilège de création; et
ajouter (48) à la liste des connexions disponibles la Bindery par le protocole d'échange de paquets entre réseaux lorsque l'ordinateur client est inscrit dans un serveur de Bindery avec privilège de création.

6. Un procédé selon la revendication 4, qui comprend les étapes consistant à:
déterminer (40) si l'ordinateur client est inscrit dans un serveur de Novell Directory Services avec privilège de création; et ajouter (42) à la liste des connexions disponibles le Novell Directory Service par le protocole d'échange de paquets entre réseaux lorsque l'ordinateur client est inscrit dans un serveur de Novell Directory Service avec privilège de création.

7. Un système d'installation de protocoles de réseaux disponibles comprenant une connexion fonctionnelle entre un ordinateur client (10) et au moins un dispositif périphérique (12), comprenant:
un moyen (14) destiné à déterminer si un protocole de réseau dans une liste de protocoles de réseaux qui inclut tous les types possibles de protocoles de réseaux est pris en charge par l'ordinateur client et le dispositif périphérique;
un moyen (14) destiné à vérifier une communication entre l'ordinateur client et le dispositif périphérique au moyen du protocole particulier de réseau lorsque le protocole de réseau est pris en charge par l'ordinateur client et le dispositif périphérique;
un moyen (14) destiné à ajouter le protocole de réseau à communication vérifiée à une liste de connexions disponibles;
un moyen destiné à répéter ladite étape de détermination pour tous les protocoles de réseaux de la liste des protocoles de réseaux;
**caractérisé** :
un moyen destiné à afficher à l'utilisateur pour sélection la liste des connexions disponibles dès lors que tous les protocoles de réseaux de la liste de protocoles de réseaux ont été traités.
